(19) Europäisches Patentamt
European Patent Office
Office européen des brevets

(11) **EP 3 433 071 B1**

(12) **EUROPEAN PATENT SPECIFICATION**

(45) Date of publication and mention
of the grant of the patent:
**27.01.2021 Bulletin 2021/04**

(51) Int Cl.:
**B29C 64/165** (2017.01) **B29C 64/321** (2017.01)
**B29C 64/343** (2017.01) **B29C 64/357** (2017.01)
**G01N 21/33** (2006.01) **B33Y 40/00** (2020.01)

(21) Application number: **16910716.6**

(22) Date of filing: **27.07.2016**

(86) International application number:
**PCT/US2016/044332**

(87) International publication number:
**WO 2018/022046 (01.02.2018 Gazette 2018/05)**

(54) **PROVIDING POWDER IN THREE-DIMENSIONAL (3D) ADDITIVE MANUFACTURING**

BEREITSTELLUNG VON PULVER IN EINER DREIDIMENSIONALEN (3D) GENERATIVEN FERTIGUNG

FOURNITURE DE POUDRE LORS DE LA FABRICATION ADDITIVE TRIDIMENSIONNELLE (3D)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.01.2019 Bulletin 2019/05**

(73) Proprietor: **Hewlett-Packard Development Company, L.P.**
**Spring TX 77389 (US)**

(72) Inventors:
• **WILLIAMS, Kenneth R.**
**Vancouver, Washington 98683 (US)**
• **KLOPFENSTEIN, Michael F.**
**Vancouver, Washington 98683 (US)**
• **EWALD, Brent**
**Vancouver, Washington 98683 (US)**

(74) Representative: **Haseltine Lake Kempner LLP**
**Redcliff Quay**
**120 Redcliff Street**
**Bristol BS1 6HU (GB)**

(56) References cited:
EP-A1- 0 635 702        WO-A1-2015/124903
JP-A- 2005 335 199      RU-C2- 2 477 219
RU-C2- 2 515 320        US-A- 4 941 778
US-A1- 2010 161 102     US-A1- 2014 291 536

## Description

### BACKGROUND

Additive manufacturing processes can produce three-dimensional (3D) objects by providing a layer-by-layer accumulation and unification of material patterned from a digital model. In 3D printing, for example, digitally patterned portions of successive material layers can be joined together by fusing, binding, or solidification through processes including sintering, extrusion, and irradiation. The quality, strength, and functionality of objects produced by such systems can vary depending on the type of additive manufacturing technology used. Published United States patent application 20100161102 describes a method of providing a material amount for a generative manufacturing method.

### BRIEF DESCRIPTION OF THE DRAWINGS

Examples will now be described with reference to the accompanying drawings, in which:

> FIG. 1 shows a perspective view of an example of a 3D additive manufacturing system in which in-line assays can evaluate a material property of powders from multiple supplies to enable real-time adjustment of the supply feed rates to produce a powder blend of a specified material strength;
> FIG. 2 shows a perspective view of an alternate example of a 3D additive manufacturing system in which a single in-line assay is employed to measure and control the material strength of a blended build powder;
> FIGs. 3 and 4 are flow diagrams showing example methods 300 and 400, of printing a three-dimensional (3D) object.

Throughout the drawings, identical reference numbers designate similar, but not necessarily identical, elements.

### DETAILED DESCRIPTION

In some additive manufacturing processes, powdered build material can be layered onto a platform and fused together, layer by layer, to form a three-dimensional (3D) object. Fusing can include applying heat to bind the powdered build material together by sintering the material or by fully melting the material. A selected portion of the powdered material in each layer can be heated to fuse the selected portion into a cross-section of the 3D object. Heating the selected portion of the powdered material can also fuse it (i.e., bind it) to an underlying cross-sectional layer that has been previously fused. In some examples, heating the selected portions of each powder layer can be achieved using a laser to melt or sinter the powder. In some examples, heating the selected portions of powder can be achieved by applying liquid fusing agents and then exposing the powder to fusing energy. The liquid fusing agents can absorb the fusing energy to heat the selected portions of powder to the point of sintering or fully melting.

In either case, a non-fused portion of build powder in each powder layer can remain around the fused 3D object. The non-fused powder has not been heated to a high enough temperature to cause sintering or melting. However, the non-fused powder has experienced considerable heating, which can cause it to form a loosely bound cake-like structure that can be broken down again into powder and then re-used, or recycled. The recycled powder can be mixed with new powder and used again in subsequent 3D print jobs to form additional 3D objects. Through this process, powder is often used and recycled multiple times. With each re-use, the powder experiences significant heating, followed by cooling. The cycles of heating and cooling are known to degrade some of the material properties of the powder, including the strength of the powder. Therefore, recycled powder has somewhat less than maximum material strength, while purely new powder can be considered to be at maximum material strength.

Users of additive manufacturing devices, such as selective laser sintering (SLS) devices and 3D printing devices, have an interest in knowing the strength of the powdered build material being used to produce 3D objects. In some 3D print jobs it may be important to use purely new powder to produce objects that have maximum strength, while for other jobs it may be acceptable to use a blend of new powder and recycled powder to produce objects whose strength is somewhat less than the maximum strength. Due to the cost associated with the powdered build material, an economic incentive exists to use as much recycled powder as possible while still maintaining an appropriate material strength for the particular 3D print job. However, supplies of recycled powder often include a blend of powders that have been recycled a different number of times and/or an unknown number of times. This uncertainty presents a challenge when trying to determine with any precision what volumetric blend of recycled powder and new powder should be used to achieve a given material strength for a particular 3D print job.

Accordingly, in some examples described herein, an additive manufacture device and methods enable control over the blending of multiple input powders to produce a blended powder with a material strength that satisfies a specified material strength of a 3D object. In some examples, an in-line assay is deployed at the feed output of each of a number of powder supplies that can contain amounts of arbitrary, nonhomogeneous powdered build material to be blended. Each assay continually evaluates in real time, a material property of the powder that can be correlated with the material strength of the powder through a look up table, for example. One example of a material property that can be evaluated and correlated with the powder's strength is the spectral absorbance of the powder. Using a user-specified material strength of a 3D object, and the material strengths determined for the different powders from each supply, a ratio can be calculated to control the powder feed rate from each supply that will create a powder blend that achieves the specified material strength of the 3D object. The ongoing determination of the material strengths of the powders being blended from each powder supply enables ongoing calculations to update the powder supply ratio. The continually updating ratio enables a continual adjustment of the feed rate of powder coming from each supply to achieve the specified material strength in the powder blend.

In some examples, instead of an in-line assay being deployed at the feed output of each powder supply, a single in-line assay can be deployed at the blended powder output. The single in-line assay continually evaluates in real time, a material property (e.g., the spectral absorbance) of the blended powder that can be correlated with the material strength of the blended powder. The continual strength measurements made of the blended powder enable an ongoing calculation of a powder supply ratio that can be used to continually adjust the amount of powder coming from each supply to achieve a desired material strength from the powder blend.

In a particular example, a method of providing build powder for the additive manufacturing of a 3D object includes blending input powders into a blended powder for producing a 3D object, and during the blending, determining a material strength value of each input powder. Based on the material strength value of each input powder, a ratio is calculated that comprises a ratio of the input powders to achieve a specified material strength in the blended powder. The feed rates of the input powders are adjusted according to the ratio.

In another example, a device for producing 3D objects comprising includes a blender to blend multiple input powders from multiple powder supplies, and an assay associated with each supply to measure a material property of each input powder. A controller of the device is to use the measured material properties to determine a ratio of feed rates for the multiple powder supplies to achieve a blended powder having a specified material strength. A powder flow dispenser associated with each supply is to adjust the feed rates according to the ratio.

In another example, a non-transitory machine-readable storage medium stores instructions that when executed by a processor of a three-dimensional (3D) additive manufacturing device cause the device to receive a specified material strength for a 3D object. The device is to blend multiple input powders to form a powder blend for the 3D object, and to determine a material strength of each input powder. Based on the material strength of each input powder and the specified material strength of the 3D object, the device is to adjust an input ratio of each input powder to form the powder blend with the specified material strength.

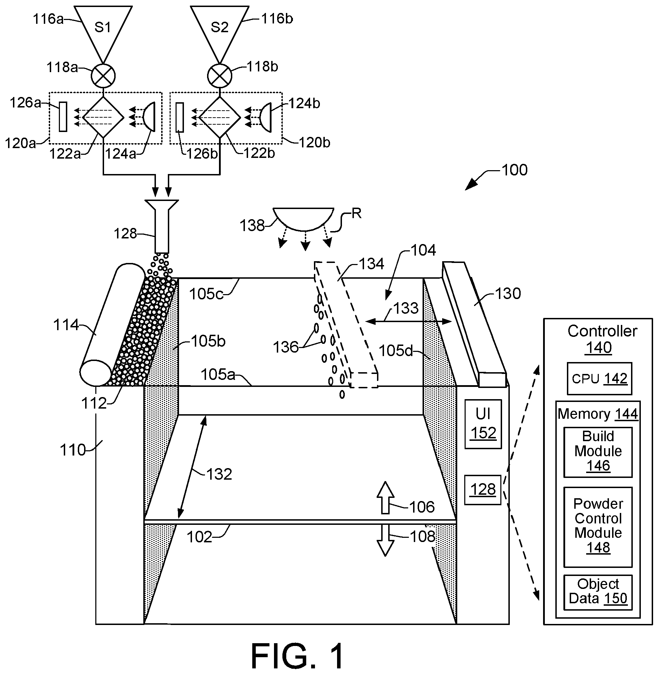

FIG. 1 shows a perspective view of an example of a 3D additive manufacturing system 100 in which in-line assays can evaluate a material property of powders from multiple supplies to enable real-time adjustment of the supply feed rates to produce a powder blend of a specified material strength. In the illustrated example, the 3D additive manufacturing system 100 comprises a 3D printing system 100. However, other 3D additive manufacturing systems such as systems employing selective laser sintering are also contemplated as suitable examples.

The example 3D printing system 100 includes a moveable printing platform 102, or build platform 102 that can serve as a floor to a work space 104 in which a 3D object (not shown in FIG. 1) can be printed. The work space 104 can include fixed walls 105 (illustrated as front wall 105a, side wall 105b, back wall 105c, side wall 105d) around the build platform 102. The fixed walls 105 and platform 102 can contain a volume of powdered build material deposited layer by layer into the work space 104 during printing of a 3D object. For purposes of this description and to help illustrate different elements and functions of the 3D printing system 100, the front wall 105a of the work space 104 is shown as being transparent. During printing, a build volume within the work space 104 can include all or part of a 3D object formed by layers of powder that are processed with the application of liquid fusing agent and fusing energy (e.g., radiation). The build volume can also include non-processed powder that surrounds and supports the 3D object within the work space 104.

The build platform 102 is moveable within the work space 104 in an upward and downward direction as indicated by up arrow 106 and down arrow 108, respectively. When the printing of a 3D object begins, the build platform 102 can be located in an upward position toward the top of the work space 104 as a first layer of powdered build material 112 is deposited onto the platform 102 and processed. After a first layer of powder has been processed, the platform 102 can move in a downward direction 108 as additional layers of powdered build material 112 from a source 110 are deposited onto the platform 102 and processed.

The example 3D printing system 100 includes a source 110 of powdered build material 112. The powdered build material 112 comprises a blended powder 112 that can be formed by blending multiple different powders from different powder supplies 116, as discussed in more detail below. The blended powder 112 can comprise powdered material made from various materials that are suitable for producing 3D objects. Such powdered materials can include, for example, polymers, glass, ceramics (e.g., alumina, $Al_2O_3$), Hydroxyapatite, metals, and so on. The printing system 100 can spread the blended powder 112 from the source 110 into the work space 104 using a spreader 114 to controllably spread the powder 112 into layers over the build platform 102, and/or over other previously deposited layers of powder. A spreader 114 can include, for example, a roller, a blade, or another type of material spreading device. Although not illustrated, in some examples a carriage can be associated with the source 110 and/or powder spreader 114 to convey the source and spreader over the build platform 102 during an application of blended powder 112 onto the platform.

To provide blended powder 112 to the source 110, the example 3D printing system 100 includes multiple powder supplies 116 (illustrated as supplies 116a and 116b). In the example of FIG. 1, two powder supplies S1 and S2 are shown and illustrated as 116a and 116b. However, in other examples, additional powder supplies can be used. Each powder supply 116 contains build powder that is either new powder that has not been used before in a 3D printing process, or recycled powder that can be a mix of powders that have been used and reused any number of times. In some examples, the composition of recycled powder in a supply 116 can be a nonhomogeneous mix of powder that varies significantly from the beginning to the end of the supply with respect to the number of times the powder has been recycled through the heating and cooling cycles of previous 3D print jobs. Each powder supply 116 includes an associated powder flow dispenser 118 to control the flow rate of powder from its respective supply 116 into the source 110. The flow dispenser 118 can be implemented in various ways including as a rotating shaft or blade, or another servo mechanism that enables a continual and controllable flow of powder from the supply 116.

Each flow dispenser 118 dispenses powder from its respective supply 116 into the source 110 through an assay device 120, or simply an assay 120, as alternately referred to herein. Each assay device 120 (illustrated as assay devices 120a and 120b) includes a transparent or optically clear pass-through chamber 122 (illustrated as chambers 122a and 122b), such as a cuvette, through which powder can pass from a supply into source 110. The pass-through chambers 122 are optically clear to ultra-violet (UV) light, and they permit UV light from respective UV light sources 124 (illustrated as UV light sources 124a and 124b) to impinge upon powder as the powder passes through the chamber. UV light passing through the powder within the chambers 122 can be detected by photometers 126.

The photometers 126 (illustrated as photometer 126a and 126b) can detect the amount of UV light that passes through the powder samples within the chambers 122. In some examples, a photometer 126 can comprise a photodiode detector, a charge-coupled device (CCD), or other similar light sensing device. In different examples, a photometer 126 can function at a targeted light wavelength, or it can function at a range of wavelengths with a filter to enable detection at a particular wavelength. The measurement of light made by the photometers 126 is a measure of transmittance of the powder within the chambers 122. The measured transmittance can be used to determine the absorbance of the powder, which is an indication of the amount of light absorbed by the powder. Thus, transmittance is a property of the powder that can be directly measured as the amount of light passing through the sample, while absorbance is a property of the powder that is indirectly measured as the amount of light absorbed by the sample. In some examples reflectance can also be measured from light reflecting off of the powder samples within the chambers 122. Reflectance is also a property of the powder that can be measured as a way to determine absorbance. The absorbance of the powder can be correlated to the material strength of the powder, for example, through a look up table as described below.

Each UV light source 124 can transmit a beam of light at a particular wavelength or range of wavelengths. In some examples, a UV light source 124 can comprise a UV LED (light emitting diode) that emits UV light at a particular wavelength or range of wavelengths. In some examples, a UV light source 124 can function as a spectrometer that comprises components (not individually shown) to enable the source to transmit a beam of light at a particular wavelength or range of wavelengths. For example, each light source 124 can include a UV lamp or light bulb to provide light in the UV spectrum that covers a wide range of wavelengths from 100 to 400 nanometers. In some examples, a UV lamp or bulb can provide UV light in a more limited range, such as the UVB range that covers wavelengths from 280 to 315 nanometers. A collimator lens within the light source 124 can focus the UV light into a beam that passes through a prism to split the light into several wavelengths. A wavelength selector within light source 124 can then filter the wavelengths to allow a particular wavelength of UV light to pass out of the light source 124.

In different examples, depending on the type of powder material supplied by powder supplies 116, the wavelength of light emitted from light source 124 can be varied. In some examples, such as examples described here, the wavelength of light emitted from light source 124 can be within the UVB range at approximately 310 nanometers. At a wavelength of approximately 310 nanometers, Polyamide 12 (PA-12) powder from supplies 116 has been shown to exhibit an increased response in absorbance. Accordingly, for PA-12 powder, the use of UV light at wavelengths of approximately 310 nanometers can provide a more accurate measurement of absorbance than other wavelengths. In other examples, different types of powders or build materials from supplies 116 may exhibit increased absorbance at different wavelengths.

As shown in FIG. 1, once powder has been dispensed from the supplies 116 and evaluated by an assay device 120, it can pass through a blender 128 and be mixed into blended powder 112 and deposited into source 110 for use in the 3D printing system to print a 3D object. In different examples, a blender 128 can be implemented as an air blender, a rotating shaft or blade mixer, or some other suitable powder blender capable of blending multiple powders into a homogeneous powder blend 112.

As noted above, printing a 3D object includes depositing and processing layers of powder 112 on the build platform 102. Processing a layer of powder 112 includes depositing a liquid agent onto the layer with a liquid agent dispenser 130. While other types of liquid dispensers are possible, the example dispenser 130 shown and described herein comprises a drop-on-demand printhead 130 that can be scanned over the build platform 102 to selectively deliver a fusing agent or other liquid onto a powder bed. Examples of drop-on-demand printheads include thermal inkjet and piezoelectric inkjet printheads that comprise an array of liquid ejection nozzles. In some examples, the printhead 130 has a length dimension that enables it to span the full depth 132 of the build platform 102. Thus, a printhead 130, can enable a page-wide or platform-wide coverage of the powder bed through a single scan of the printhead 130 over the build platform 102.

FIG. 1 shows an example of the scanning motion (illustrated by direction arrow 133) of the printhead 130. In some examples a carriage (not shown) can be associated with the printhead 130 to convey the printhead 130 over the build platform 102 during the application of a liquid agent onto a layer of powder on the platform 102. In some examples the printhead 130 can be controlled to scan over the platform 102, as illustrated by the dashed-line print head representation 134. Although not shown in the example of FIG. 1, during printing, a portion of a 3D object would be present within the work space 104 as the printhead 130 scans over the work space and ejects droplets 136 of a fusing agent or other liquid onto a layer of the object.

Examples of fusing agents suitable for ejection from printhead 130 include water-based dispersions comprising a radiation absorbing agent. The radiation absorbing agent can be an infrared light absorber, a near infrared light absorber, or a visible light absorber. In some examples, the fusing agent 136 can be an ink-type formulation including carbon black as the radiation absorbing agent. Dye based and pigment based colored inks are examples of inks that include visible light absorbing agent.

As shown in FIG. 1, the example 3D printing system 100 also includes a fusing energy source such as radiation source 138. The radiation source 138 can apply radiation R to layers of powder in the work space 104 to facilitate the heating and fusing of the powder. Fusing agent 136 can be selectively applied by printhead 130 to a layer of powder to enhance the absorption of the radiation R and convert the absorbed radiation into thermal energy, which can elevate the temperature of the powder sufficiently to cause curing (e.g., fusing, binding, sintering) of the particles of the powder. The radiation source 138 can be implemented in a variety of ways including, for example, as a curing lamp or as light emitting diodes (LEDs) to emit IR, near-IR, UV, or visible light, or as lasers with specific wavelengths. The radiation source 138 can depend in part on the type of fusing agent and/or powder being used in the printing process. In some examples, the radiation source 138 can be attached to a carriage (not shown) and can be scanned across the work space 104.

The example 3D printing system 100 additionally includes an example controller 140. The controller 140 can control various operations of the printing system 100 to facilitate the printing of 3D objects as generally described above, such as controllably spreading powder into the work space 104, selectively applying fusing agent 136 to portions of the powder, and exposing the powder to radiation R. In addition, the controller 140 can control powder flow dispensers 118 to control the flow rate of powder from the supplies 116 into the source 110 to achieve a particular material strength of blended powder 112, as discussed below in more detail.

An example controller 140 can include a processor (CPU) 142 and a memory 144. The controller 140 may additionally include other electronics (not shown) for communicating with and controlling various components of the 3D printing system 100. Such other electronics can include, for example, discrete electronic components and/or an ASIC (application specific integrated circuit). Memory 144 can include both volatile (i.e., RAM) and nonvolatile memory components (e.g., ROM, hard disk, optical disc, CD-ROM, magnetic tape, flash memory, etc.). The components of memory 144 comprise non-transitory, machine-readable (e.g., computer/processor-readable) media that can provide for the storage of machine-readable coded program instructions, data structures, program instruction modules, JDF (job definition format), 3MF formatted data, and other data and/or instructions executable by a processor 142 of the 3D printing system 100.

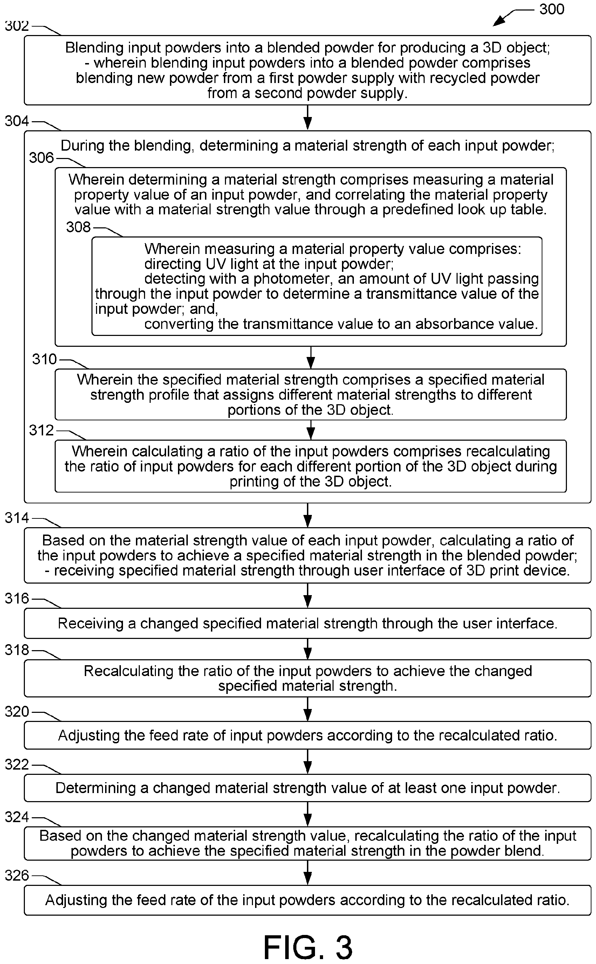

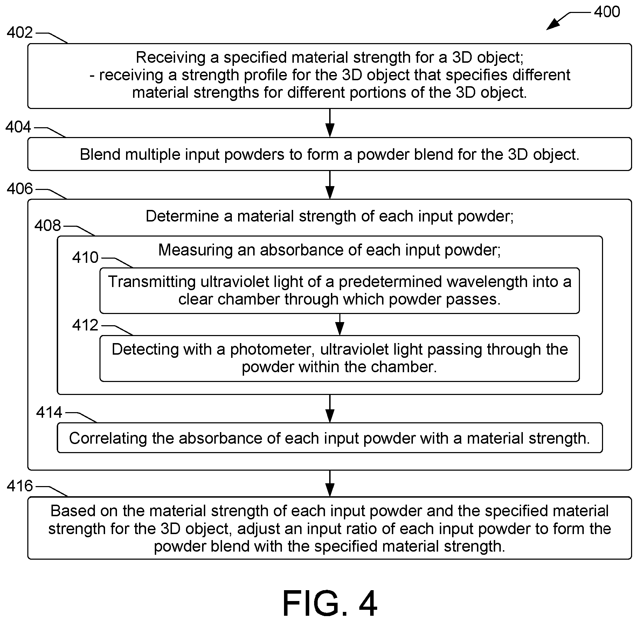

An example of executable instructions to be stored in memory 144 include instructions associated with a build module 146 and a powder control module 148, while an example of stored data includes object data 150. In general, modules 146 and 148 include programming instructions executable by processor 142 to cause the 3D printing system 100 to perform operations related to printing a 3D object within a work space 104, including controlling the flow rate of powder from supplies 116 to provide a blended powder 112 with a particular material strength. Such operations can include, for example, the operations of methods 300 and 400, described below with respect to FIGs. 3 and 4, respectively.

In some examples, controller 140 can receive object data 150 from a host system such as a computer. Object data 150 can represent, for example, object files defining 3D print jobs, or 3D object models to be printed on the 3D printing system 100. Executing instructions from the build module 146, the processor 142 can generate print data for each cross-sectional slice of a 3D object model from the object data 150. The print data can define, for example, where fusing agents are to be applied to the powder and how fusing energy is to be applied to fuse the powder. The processor 142 can use the print data to control components of the printing system 100 to process each layer of powder. Thus, the object data can be used to generate commands and/or command parameters for controlling the spreading of powder 112 from source 110 onto the build platform 102 by a spreader 114, the application of fusing agents by a printhead 130 onto layers of the powder, the application of radiation by a radiation source 138 to the layers of powder, and so on.

A powder control module 148 includes further executable instructions to enable the 3D printing system 100 to prepare a powder blend with a material strength that satisfies a specified strength for a particular 3D object. A processor 142 executing instructions from module 148 can receive, via a user interface 152, a user-specified material strength for a 3D object. Alternatively, a 3D print job from data 150 can include a specified material strength for a 3D object. A powder blend 112 can be controlled to achieve the specified material strength by measuring a material property (e.g., UV spectral absorbance) of powders being dispensed from multiple supplies 116, and by adjusting the feed rate from the supplies 116 based on the measured property. A processor 142 executes instructions to control an assay device 120 to measure the transmittance of each powder. The transmittance is converted to absorbance and then correlated with a material strength through a look-up table stored, for example, within the powder control module 148. Using the specified material strength and the material strengths determined for of each of the powders from the multiple supplies 116, the processor 142 can calculate a ratio to control the feed rate of powder being dispensed from each supply 116.

Assuming, by way of an example demonstration, that the printing system 100 has two powder supplies 116a and 116b, and the system receives through its user interface 152, a user-specified material strength of 40 megapascals (MPa) for an upcoming 3D print job. Transmittance values measured for input powders being dispensed from the supplies 116 can be used to determine the material strength of each input powder. Assuming the material strengths of the two input powders are 46 MPa from supply 116a and 38 MPa from 116b, a ratio can be determined as follows:

$$46x + 38(1-x) = 40$$

$$x = 0.25$$

where x is the percent of powder to be fed by supply 116a and 1-x is the percent of powder to be fed by supply 116b. Therefore, in this example, the feed rate ratio of powder from the supplies 116 would be 25% from supply 116a and 75% from supply 116b. This ratio of powder inputs will achieve the user-specified material strength of 40 MPa in the powder blend 112 and the 3D object printed from the powder blend 112.

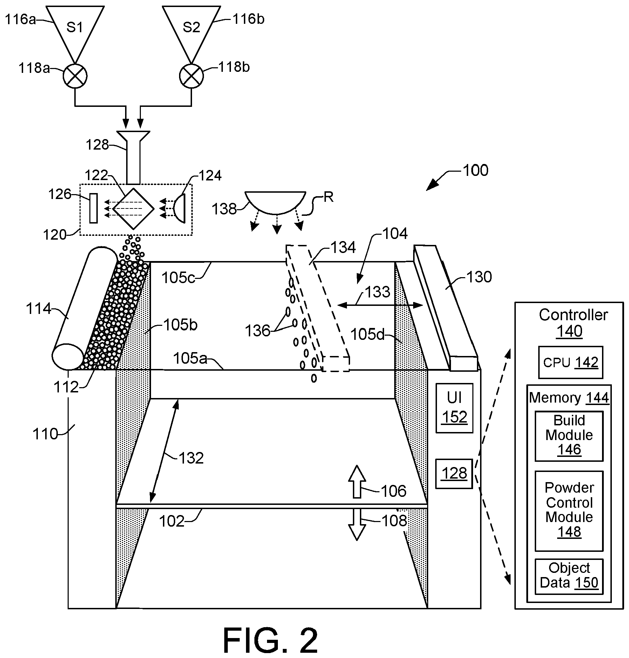

FIG. 2 shows a perspective view of an alternate example of a 3D additive manufacturing system 100 in which a single in-line assay is employed to measure and control the material strength of a blended build powder. The system 100 functions in the same or similar manner as described above with respect to the system 100 of FIG. 1. However, instead of separate assay devices 120 being used to measure each of the powders from the multiple powder supplies 116, a single assay device 120 is used to measure a material property (e.g., transmittance) of just the resulting powder blend 112 mixed from the input powders. The measured material property of the powder blend 112 can be correlated with a material strength of the powder blend 112 through a look-up table. A specified material strength from a user through a user interface 152, for example, can be continually compared with the current measured material strength of the powder blend 112, and the rate of powder being blended from each supply 116 can be adjusted to equalize the measured strength of the powder blend 112 with the specified material strength. In this example, one of the powder supplies 116 is to have new powder that is at a maximum strength.

FIGs. 3 and 4 are flow diagrams showing example methods 300 and 400, of printing a three-dimensional (3D) object. Methods 300 and 400 are associated with examples discussed above with regard to FIGs. 1 - 2, and details of the operations shown in methods 300 and 400 can be found in the related discussion of such examples. The operations of methods 300 and 400 may be embodied as programming instructions stored on a non-transitory, machine-readable (e.g., computer/processor-readable) medium, such as memory 144 shown in FIG. 1. In some examples, implementing the operations of methods 300 and 400 can be achieved by a processor, such as a processor 142 of FIG. 1, reading and executing the programming instructions stored in a memory 144. In some examples, implementing the operations of methods 300 and 400 can be achieved using an ASIC and/or other hardware components alone or in combination with programming instructions executable by a processor 142.

The methods 300 and 400 may include more than one implementation, and different implementations of methods 300 and 400 may not employ every operation presented in the respective flow diagrams of FIGs. 3 and 4. Therefore, while the operations of methods 300 and 400 are presented in a particular order within their respective flow diagrams, the order of their presentations is not intended to be a limitation as to the order in which the operations may actually be implemented, or as to whether all of the operations may be implemented. For example, one implementation of method 400 might be achieved through the performance of a number of initial operations, without performing one or more subsequent operations, while another implementation of method 400 might be achieved through the performance of all of the operations.

Referring now to the flow diagram of FIG. 3, an example method 300 of providing build powder for the additive manufacturing of a three-dimensional (3D) object begins at block 302 with blending input powders into a blended powder for producing a 3D object. In some examples, blending input powders into a blended powder comprises blending new powder from a first powder supply with recycled powder from a second powder supply. As shown at block 304, during the blending, a material strength of each input powder can be determined. Determining a material strength can include measuring a material property value of an input powder, and correlating the material property value with a material strength value through a predefined look up table, as shown at block 306. As shown at block 308, measuring a material property value can include, directing UV light at the input powder, detecting with a photometer, an amount of UV light passing through the input powder to determine a transmittance value of the input powder, and converting the transmittance value to an absorbance value. As shown at blocks 310 and 312, respectively, in some examples the specified material strength comprises a specified material strength profile that assigns different material strengths to different portions of the 3D object, and calculating a ratio of the input powders comprises recalculating the ratio of input powders for each different portion of the 3D object during printing of the 3D object.

The method 300 includes calculating a ratio of the input powders to achieve a specified material strength in the blended powder, where the calculating is based on the material strength value of each input powder, as shown at block 314. In some examples, the specified material strength can be received through a user interface of the 3D print device. The method can include receiving a changed specified material strength through the user interface, as shown at block 316, and recalculating the ratio of the input powders to achieve the changed specified material strength, as shown at block 318. The feed rate of input powders can then be adjusted according to the recalculated ratio, as shown at block 320. In some examples as shown at blocks 322, 324, and 326, respectively, the method can include determining a changed material strength value of at least one input powder, recalculating the ratio of the input powders to achieve the specified material strength in the powder blend based on the changed material strength value, and adjusting the feed rate of the input powders according to the recalculated ratio.

Referring now to the flow diagram of FIG. 4, an example method 400 of providing build powder for the additive manufacturing of a 3D object begins at block 402 with receiving a specified material strength for a 3D object. The specified material strength can be received, for example, through a user interface or through an object file for the 3D object. In some examples, receiving a specified material strength for a 3D object can include receiving a strength profile for the 3D object that specifies different material strengths for different portions of the 3D object. As shown at block 404, the method 400 includes blending multiple input powders to form a powder blend for the 3D object. The method includes determining a material strength of each input powder, as shown at block 406. In some examples, determining a material strength can include measuring the absorbance of each input powder, as shown at block 408. Measuring absorbance can include transmitting ultraviolet light of a predetermined wavelength into a clear chamber through which powder passes, and detecting ultraviolet light passing through the powder within the chamber with a photometer, as shown at blocks 410 and 412.

Determining a material strength can also include correlating the absorbance of each input powder with a material strength, as shown at block 414. Based on the material strength of each input powder and the specified material strength for the 3D object, the input ratio of each input powder can be adjusted to form the powder blend with the specified material strength, as shown at block 416.

## Claims

1. A method of additive manufacturing a three-dimensional object comprising providing build powder for additive manufacturing of a three-dimensional (3D) object, the method comprising:

   blending (302) input powders into a blended powder for producing a 3D object;
   during the blending (304), determining (306) a material strength value of each input powder;
   based on the material strength value of each input powder, calculating (314) a ratio of the input powders to achieve a specified material strength in the blended powder; and,
   adjusting (320) a feed rate of the input powders according to the ratio.

2. A method as in claim 1, further comprising:

   Determining (322) a changed material strength value of at least one input powder;
   based on the changed material strength value, recalculating (324) the ratio of the input powders to achieve the specified material strength in the powder blend; and,
   adjusting (326) the feed rate of the input powders according to the recalculated ratio.

3. A method as in claim 1, further comprising receiving (402) the specified material strength through one of a user interface of a 3D printing device, and object data defining the 3D object.

4. A method as in claim 3, further comprising:

   Receiving (316) a changed specified material strength through the user interface; recalculating (318) the ratio of the input powders to achieve the changed specified material strength; and, adjusting (320) the feed rate of the input powders according to the recalculated ratio.

5. A method as in claim 1, wherein:

   the specified material strength comprises a specified material strength profile that assigns different material strengths to different portions of the 3D object; and, calculating a ratio of the input powders comprises recalculating the ratio of input powders for each different portion of the 3D object during printing of the 3D object.

6. A method as in claim 1, wherein determining a material strength comprises:

   measuring (306) a material property value of an input powder; and, correlating (306) the material property value with a material strength value through a predefined look up table.

7. A method as in claim 6, wherein measuring a material property value of an input powder comprises:

   directing (308) UV light at the input powder; detecting (308) with a photometer, an amount of UV light passing through the input powder to determine a transmittance value of the input powder; and, converting (308) the transmittance value to an absorbance value.

8. A method as in claim 1, wherein blending input powders into a blended powder comprises blending (302) new powder from a first powder supply with recycled powder from a second powder supply.

9. An additive manufacturing device (100) for producing three-dimensional (3D) objects comprising:

   a blender (128) to blend multiple input powders from multiple powder supplies (116); an assay (120) associated with each supply to measure a material property of each input powder; a controller (140) to determine during the blending of the input powders, using the measured material properties, a ratio of feed rates for the multiple powder supplies to achieve a blended powder having a specified material strength; and, a powder flow dispenser (118) associated with each supply to adjust the feed rates according to the ratio.

10. A device as in claim 9, wherein each assay comprises:

    a transparent chamber (122) through which powder passes from a supply to the blender; an ultraviolet light source (124) to transmit ultraviolet light into the chamber; and, a photometer (126) to detect ultraviolent light that passes through powder within the chamber.

11. A device as in claim 10, wherein the ultraviolet light source comprises a filtered ultraviolet light source to transmit the ultraviolet light at a predetermined wavelength range.

12. A non-transitory machine-readable storage medium (144) storing instructions that when executed by a processor of a three-dimensional (3D) additive manufacturing device cause the device to:

    receive a specified material strength for a 3D object; blend multiple input powders to form a powder blend for the 3D object; determine a material strength of each input powder during the blending of the input powders; and, based on the material strength of each input powder and the specified material strength for the 3D object, adjust an input ratio of each input powder to form the powder blend with the specified material strength.

13. A storage medium as in claim 12, wherein determining a material strength of each input powder comprises:

    measuring an absorbance of each input powder; and, correlating the absorbance of each input powder with a material strength.

14. A storage medium as in claim 13, wherein measuring an absorbance comprises:

    transmitting ultraviolet light of a predetermined wavelength range into a clear chamber through which powder passes; and, detecting with a photometer, ultraviolet light passing through the powder within the chamber.

15. A storage medium as in claim 12, wherein receiving a specified material strength for a 3D object comprises receiving a strength profile for the 3D object that specifies different material strengths for different portions of the 3D object.

## Patentansprüche

1. Verfahren zum additiven Fertigen eines dreidimensionalen Objekts, das ein Bereitstellen von Baupulver zum additiven Fertigen eines dreidimensionalen (3D-)Objekts umfasst, wobei das Verfahren Folgendes umfasst:

   Mischen (302) von Eingabepulvern zu einem gemischten Pulver zum Herstellen eines 3D-Objekts;
   während des Mischens (304), Bestimmen (306) eines Materialfestigkeitswertes jedes Eingabepulvers;
   auf der Basis des Materialfestigkeitswertes jedes Eingabepulvers, Berechnen (314) eines Verhältnisses der Eingabepulver, um eine spezifizierte Materialfestigkeit in dem gemischten Pulver zu erreichen; und,
   Anpassen (320) einer Vorschubgeschwindigkeit der Eingabepulver gemäß dem Verhältnis.

2. Verfahren nach Anspruch 1, das ferner Folgendes umfasst:

   Bestimmen (322) eines geänderten Materialfestigkeitswertes wenigstens eines Eingabepulvers;
   auf der Basis des geänderten Materialfestigkeitswertes, Neuberechnen (324) des Verhältnisses der Eingabepulver, um die spezifizierte Materialfestigkeit in der Pulvermischung zu erreichen; und,
   Anpassen (326) der Vorschubgeschwindigkeit der Eingabepulver gemäß dem neu berechneten Verhältnis.

3. Verfahren nach Anspruch 1, das ferner ein Empfangen (402) der spezifizierten Materialfestigkeit durch eine Benutzeroberfläche einer 3D-Druckvorrichtung oder durch Objektdaten, die das 3D-Objekt definieren, umfasst.

4. Verfahren nach Anspruch 3, das ferner Folgendes umfasst:

   Empfangen (316) einer geänderten spezifizierten Materialfestigkeit durch die Benutzeroberfläche;
   Neuberechnen (318) des Verhältnisses der Eingabepulver, um die geänderte spezifizierte Materialfestigkeit zu erreichen; und

   Anpassen (320) der Vorschubgeschwindigkeit der Eingabepulver gemäß dem neu berechneten Verhältnis.

5. Verfahren nach Anspruch 1, wobei:

   die spezifizierte Materialfestigkeit ein spezifiziertes Materialfestigkeitsprofil umfasst, das verschiedenen Abschnitten des 3D-Objekts unterschiedliche Materialfestigkeiten zuweist; und
   das Berechnen eines Verhältnisses der Eingabepulver das Neuberechnen des Verhältnisses der Eingabepulver für jeden verschiedenen Abschnitt des 3D-Objekts während des Druckens des 3D-Objekts umfasst.

6. Verfahren nach Anspruch 1, wobei das Bestimmen einer Materialfestigkeit Folgendes umfasst:

   Messen (306) eines Materialeigenschaftswertes eines Eingabepulvers; und
   Korrelieren (306) des Materialeigenschaftswertes mit einem Materialfestigkeitswert durch eine vordefinierte Nachschlagetabelle.

7. Verfahren nach Anspruch 6, wobei das Messen eines Materialeigenschaftswertes eines Eingabepulvers Folgendes umfasst:

   Richten (308) von UV-Licht auf das Eingabepulver;
   Erfassen (308), mit einem Photometer, einer Menge UV-Licht, die durch das Eingabepulver hindurchtritt, um einen Durchlässigkeitswert des Eingabepulvers zu bestimmen; und
   Umwandeln (308) des Durchlässigkeitswertes in einen Absorbanzwert.

8. Verfahren nach Anspruch 1, wobei das Mischen von Eingabepulvern zu einem gemischten Pulver das Mischen (302) von neuem Pulver von einem ersten Pulvervorrat mit wiederverwertetem Pulver von einem zweiten Pulvervorrat umfasst.

9. Additive Fertigungsvorrichtung (100) zum Herstellen dreidimensionaler (3D-)Objekte, die Folgendes umfasst:

   einen Mischer (128), um mehrere Eingabepulver von mehreren Pulvervorräten (116) zu mischen;
   einen Assay (120), der jedem Vorrat zugeordnet ist, um eine Materialeigenschaft jedes Eingabepulvers zu messen;
   eine Steuerung (140), um während des Mischens der Eingabepulver unter Verwendung der gemessenen Materialeigenschaften ein Verhältnis der Vorschubgeschwindigkeiten für die mehreren Pulvervorräte zu bestimmen, um ein gemischtes Pulver mit einer spezifizierten Materialfestigkeit zu erreichen; und, einen Pulverströmungsspender (118), der jedem Vorrat zugeordnet ist, um die Vorschubgeschwindigkeiten je nach dem Verhältnis anzupassen.

**10.** Vorrichtung nach Anspruch 9, wobei jeder Assay Folgendes umfasst:

eine transparente Kammer (122), durch die das Pulver von einem Vorrat zu dem Mischer gelangt;
eine Ultraviolettlichtquelle (124), um ultraviolettes Licht in die Kammer zu transmittieren; und ein Photometer (126), um Ultraviolettlicht zu erfassen, das durch das Pulver innerhalb der Kammer gelangt.

**11.** Vorrichtung nach Anspruch 10, wobei die Ultraviolettlichtquelle eine Quelle gefilterten Ultraviolettlichts umfasst, um das Ultraviolettlicht in einem zuvor bestimmten Wellenlängenbereich zu transmittieren.

**12.** Nichtflüchtiges maschinenlesbares Speichermedium (144), das Anweisungen speichert, die, wenn sie durch einen Prozessor einer dreidimensionalen (3D-)Vorrichtung zum additiven Fertigen ausgeführt werden, die Vorrichtung zu Folgendem veranlassen:

Empfangen einer spezifizierten Materialfestigkeit für ein 3D-Objekt;
Mischen mehrerer Eingabepulver zu einer Pulvermischung für das 3D-Objekt;
Bestimmen einer Materialfestigkeit jedes Eingabepulvers während des Mischens der Eingabepulver; und,
auf der Basis der Materialfestigkeit jedes Eingabepulvers und der spezifizierten Materialfestigkeit für das 3D-Objekt, Anpassen eines Eingabeverhältnisses jedes Eingabepulvers, um die Pulvermischung mit der spezifizierten Materialfestigkeit auszubilden.

**13.** Speichermedium nach Anspruch 12, wobei das Bestimmen einer Materialfestigkeit jedes Eingabepulvers Folgendes umfasst:

Messen einer Absorbanz jedes Eingabepulvers; und,
Korrelieren der Absorbanz jedes Eingabepulvers mit einer Materialfestigkeit.

**14.** Speichermedium nach Anspruch 13, wobei das Messen einer Absorbanz Folgendes umfasst:

Transmittieren von Ultraviolettlicht eines zuvor bestimmten Wellenlängenbereichs in eine klare Kammer, durch die Pulver gelangt; und, Erfassen, mit einem Photometer, von Ultraviolettlicht, das durch das Pulver innerhalb der Kammer gelangt.

**15.** Speichermedium nach Anspruch 12, wobei das Empfangen einer spezifischen Materialfestigkeit für ein 3D-Objekt das Empfangen eines Festigkeitsprofils für das 3D-Objekt umfasst, das unterschiedliche Materialfestigkeiten für unterschiedliche Abschnitte des 3D-Objekts spezifiziert.

**Revendications**

**1.** Procédé de fabrication additive d'un objet tridimensionnel comprenant la fourniture d'une poudre de fabrication pour la fabrication additive d'un objet tridimensionnel (3D), le procédé comprenant :

le mélange (302) des poudres d'entrée en une poudre mélangée pour produire un objet 3D ;
pendant le mélange (304), la détermination (306) d'une valeur de résistance de matériau de chaque poudre d'entrée ;
en fonction de la valeur de résistance de matériau de chaque poudre d'entrée, le calcul (314) d'un rapport des poudres d'entrée pour obtenir une résistance de matériau spécifiée dans la poudre mélangée ; et,
le réglage (320) d'une vitesse d'alimentation des poudres d'entrée selon le rapport.

**2.** Procédé selon la revendication 1, comprenant en outre :

la détermination (322) d'une valeur de résistance de matériau modifiée d'au moins une poudre d'entrée ;
en fonction de la valeur de résistance de matériau modifiée, le recalcul (324) du rapport des poudres d'entrée pour atteindre la résistance de matériau spécifiée dans le mélange de poudres ; et,
le réglage (326) de la vitesse d'alimentation des poudres d'entrée selon le rapport recalculé.

**3.** Procédé selon la revendication 1, comprenant en outre la réception (402) de la résistance de matériau spécifiée par l'intermédiaire d'une interface utilisateur d'un dispositif d'impression 3D, et des données d'objet définissant l'objet 3D.

**4.** Procédé selon la revendication 3, comprenant en outre :

la réception (316) d'une résistance de matériau spécifiée modifiée par l'intermédiaire de l'interface utilisateur ;

le recalcul (318) du rapport des poudres d'entrée pour obtenir la résistance de matériau spécifiée modifiée ; et,

le réglage (320) de la vitesse d'alimentation des poudres d'entrée selon le rapport recalculé.

5. Procédé selon la revendication 1, dans lequel :

la résistance de matériau spécifiée comprend un profil de résistance de matériau spécifiée qui attribue différentes résistances de matériau à différentes parties de l'objet 3D ; et,

le calcul d'un rapport des poudres d'entrée comprend le recalcul du rapport des poudres d'entrée pour chaque partie différente de l'objet 3D pendant l'impression de l'objet 3D.

6. Procédé selon la revendication 1, dans lequel la détermination d'une résistance de matériau comprend :

la mesure (306) d'une valeur de propriété de matériau d'une poudre d'entrée ; et,

la mise en corrélation (306) de la valeur de propriété du matériau avec une valeur de résistance du matériau par l'intermédiaire d'une table de consultation prédéfinie.

7. Procédé selon la revendication 6, dans lequel la mesure d'une valeur de propriété de matériau d'une poudre d'entrée comprend :

la direction (308) de la lumière UV vers la poudre d'entrée ;

la détection (308) au moyen d'un photomètre, d'une quantité de lumière UV traversant la poudre d'entrée pour déterminer une valeur de transmittance de la poudre d'entrée ; et,

la conversion (308) de la valeur de transmittance en une valeur d'absorbance.

8. Procédé selon la revendication 1, dans lequel le mélange de poudres d'entrée en une poudre mélangée comprend le mélange (302) d'une nouvelle poudre issue d'une première alimentation en poudre avec de la poudre recyclée issue d'une seconde alimentation en poudre.

9. Dispositif de fabrication additive (100) pour produire des objets tridimensionnels (3D) comprenant :

un mélangeur (128) pour mélanger plusieurs poudres d'entrée à partir de multiples alimentations en poudre (116) ;

un test (120) associé à chaque alimentation pour mesurer une propriété de matériau de chaque poudre d'entrée ;

un dispositif de commande (140) pour déterminer pendant le mélange des poudres d'entrée, à l'aide de propriétés de matériau mesurées, un rapport de vitesses d'alimentation pour les multiples sources de poudre afin d'obtenir une poudre mélangée ayant une résistance de matériau spécifiée ; et,

un distributeur d'écoulement de poudre (118) associé à chaque alimentation pour régler les vitesses d'alimentation selon le rapport.

10. Dispositif selon la revendication 9, dans lequel chaque test comprend :

une chambre transparente (122) à travers laquelle la poudre passe d'une alimentation au mélangeur ;

une source de lumière ultraviolette (124) pour transmettre la lumière ultraviolette dans la chambre ; et,

un photomètre (126) pour détecter la lumière ultraviolette qui passe à travers la poudre à l'intérieur de la chambre.

11. Dispositif selon la revendication 10, dans lequel la source de lumière ultraviolette comprend une source de lumière ultraviolette filtrée pour transmettre la lumière ultraviolette dans une plage de longueurs d'onde prédéterminée.

12. Support de stockage non transitoire lisible par machine (144) stockant des instructions qui, lorsqu'elles sont exécutées par un processeur d'un dispositif de fabrication additive tridimensionnelle (3D), amènent le dispositif à :

recevoir une résistance de matériau spécifiée pour un objet 3D ;

mélanger plusieurs poudres d'entrée pour former un mélange de poudre pour l'objet 3D ;

déterminer une résistance de matériau de chaque poudre d'entrée pendant le mélange des poudres d'entrée ; et,

en fonction de la résistance du matériau de chaque poudre d'entrée et de la résistance du matériau spécifiée pour l'objet 3D, régler un rapport d'entrée de chaque poudre d'entrée pour former le mélange de poudre avec la résistance de matériau spécifiée.

13. Support de stockage selon la revendication 12, dans lequel la détermination d'une résistance de matériau de chaque poudre d'entrée comprend :

la mesure d'une absorbance de chaque poudre d'entrée ; et,

la mise en corrélation de l'absorbance de chaque poudre d'entrée avec une résistance du matériau.

14. Support de stockage selon la revendication 13, dans lequel la mesure d'une absorbance comprend :

la transmission de la lumière ultraviolette d'une plage de longueurs d'onde prédéterminée dans une chambre transparente à travers laquelle la poudre passe ; et,
la détection, à l'aide d'un photomètre, de la lumière ultraviolette traversant la poudre à l'intérieur de la chambre.

15. Support de stockage selon la revendication 12, dans lequel la réception d'une résistance de matériau spécifiée pour un objet 3D comprend la réception d'un profil de résistance pour l'objet 3D qui spécifie différentes résistances de matériau pour différentes parties de l'objet 3D.

FIG. 1

FIG. 2

302 —

Blending input powders into a blended powder for producing a 3D object;
- wherein blending input powders into a blended powder comprises
blending new powder from a first powder supply with recycled powder
from a second powder supply.

304 —

During the blending, determining a material strength of each input powder;

306 —

Wherein determining a material strength comprises measuring a material
property value of an input powder, and correlating the material property
value with a material strength value through a predefined look up table.

308 —

Wherein measuring a material property value comprises:
directing UV light at the input powder;
detecting with a photometer, an amount of UV light passing
through the input powder to determine a transmittance value of the
input powder; and,
converting the transmittance value to an absorbance value.

310 —

Wherein the specified material strength comprises a specified material
strength profile that assigns different material strengths to different
portions of the 3D object.

312 —

Wherein calculating a ratio of the input powders comprises recalculating
the ratio of input powders for each different portion of the 3D object during
printing of the 3D object.

314 —

Based on the material strength value of each input powder, calculating a ratio of
the input powders to achieve a specified material strength in the blended powder;
- receiving specified material strength through user interface of 3D print device.

316 —

Receiving a changed specified material strength through the user interface.

318 —

Recalculating the ratio of the input powders to achieve the changed
specified material strength.

320 —

Adjusting the feed rate of input powders according to the recalculated ratio.

322 —

Determining a changed material strength value of at least one input powder.

324 —

Based on the changed material strength value, recalculating the ratio of the input
powders to achieve the specified material strength in the powder blend.

326 —

Adjusting the feed rate of the input powders according to the recalculated ratio.

300

FIG. 3

400

402

Receiving a specified material strength for a 3D object;
- receiving a strength profile for the 3D object that specifies different material strengths for different portions of the 3D object.

404

Blend multiple input powders to form a powder blend for the 3D object.

406

Determine a material strength of each input powder;

408

Measuring an absorbance of each input powder;

410

Transmitting ultraviolet light of a predetermined wavelength into a clear chamber through which powder passes.

412

Detecting with a photometer, ultraviolet light passing through the powder within the chamber.

414

Correlating the absorbance of each input powder with a material strength.

416

Based on the material strength of each input powder and the specified material strength for the 3D object, adjust an input ratio of each input powder to form the powder blend with the specified material strength.

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100161102 A